# EUROPEAN PATENT SPECIFICATION

(11) **EP 1 593 300 B1**
(45) Date of publication and mention of the grant of the patent: **08.10.2008**
(21) Application number: 04381012.6
(22) Date of filing: 06.05.2004
(51) Int. Cl.: A01G 1/04, B65D 5/54

(54) **Device for growing mushrooms**
Pilzzuchtverfahren
Procédé pour la culture de champignons

(43) Date of publication of application: 09.11.2005
(73) Proprietor: Gomis Frau, José, 07010 Palma de Mallorca (ES)
(72) Inventor: Gomis Frau, José, 07010 Palma de Mallorca (ES)
(74) Representative: Sanz-Bermell Martinez, Alejandro

(56) References cited:
- EP-A- 0 900 737
- DE-A- 3 434 486
- JP-A- 9 205 877
- US-A- 1 808 383
- US-A- 4 735 014
- US-A- 5 641 118

## Description

This invention refers to an easily transportable device for growing mushrooms, even in private homes.

It is applicable in intensive farming and for small-scale crops.

Specifically, the device consists of a box made of disposable material which contains the cellulosic substrate for growing the mushrooms, preferable cereal straw, this box having handles that can be of two types or both at the same time:
(i) handles made in the form of holes in the sides of the box; and
(ii) a handle in the top of the box, this box having removable pre-punched parts forming holes for emergency removal of the mushrooms through said holes (after breaking the plastic that envelops a first layer of the substrate) and removable pre-punched bands for the same purpose as mentioned above, apart from upper holes for inserting the inoculant of the mushrooms to be grown and/or water, and finally a bottom tray, preferably made of plastic, which retains any water that might drop into the bottom of the box.

The main purpose of the device is for growing mushrooms of the user's choice in private homes, villas, country houses, cellars, preferably Pleurotus eryngii mushrooms (King Oyster or Cardoncello mushroom), Pleurotus ostreatus (Oyster mushroom) and Agaricus and Shiitake (lentinus edodes). For this reason the device has an easily transportable structure.

Spanish patent ES 2010047 mentions a procedure for growing mushrooms characterised by the use of two types of material, one of which is the "enveloping material" which maintains the production of mushrooms and the other is "non-enveloping material" which does not sustain the production of mushrooms, this characteristic of patent ES 2010047 being the essential nature of the claims, The present invention does not require the use of two different materials for producing these. Furthermore, unlike ES 2010047, the present invention does not require special mechanisms (such as the double substrate or for example, the use of resins for preventing the appearance of marks through external watering), because in the present invention water is provided through holes in such a way that the mushrooms are dampened from the inside of the box, in the event of opting to add water in the device according to the present invention.

The Spanish patent, a translation of European patent ES 2035869, talks of a method for growing eatable fungi generated through the decomposition of wood. In the present invention, the use of wood is not required; the inventor has instead found that cereal straws are excellent substrates for growing mushrooms, in particular those of the Tricholomataceae family (which includes the Pleurotus genus). The main claim on which the others depend in ES 2035860, refers to the substrate being subject to a thermal shock, with certain temperatures and execution times.

A device according to the preamble of claim 1 is known from DE-A-3 434 486.

Other Spanish and foreign inventions refer to mushroom growing devices, but none has been found similar to the box-growing system claimed about in this invention.

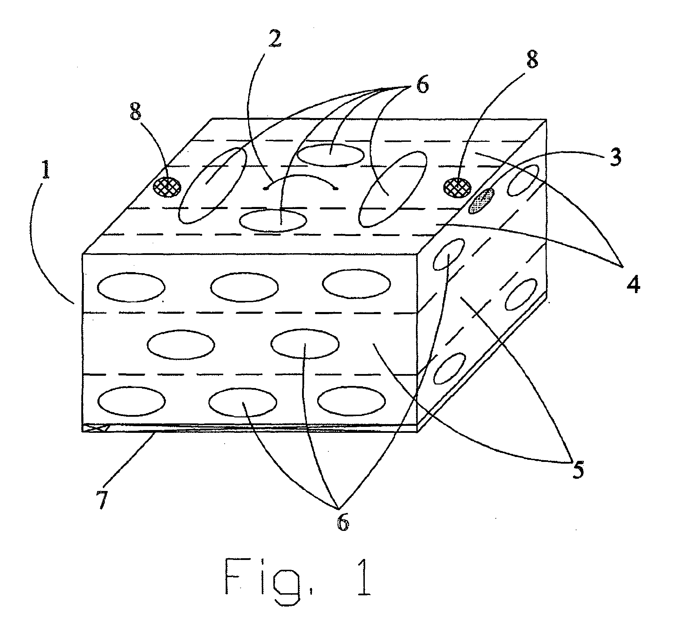

Figure 1 shows the device, in which one can see:
   (1) A box made of light material preferably cardboard.
   (2) An upper handle
   (3) Side handles
   (4) And (5) pre-punched strips surrounding the boxes, which can be removed, leaving a second layer of cardboard underneath which matches the punched pattern (6).
   (5) Pre-punched holes made in the box, which allow the substrate to make contact with the environment. The substrate can be sterilised and/or treated with appropriate pesticides; and the inoculant can be added before or after industrial preparation of the box. The inoculant can consist of any vegetative stage which allows development until the optimum degree of consumption of the mushroom is reached.
   (7) A tray of impermeable material, inside the box, which retains any liquid which might accumulate in the bottom of the box (7).
   (8) Finally there are holes for inserting the inoculant (if this had not been inserted when preparing the box before closing this) and at will, phyto-chemical products and/or water for better growth.

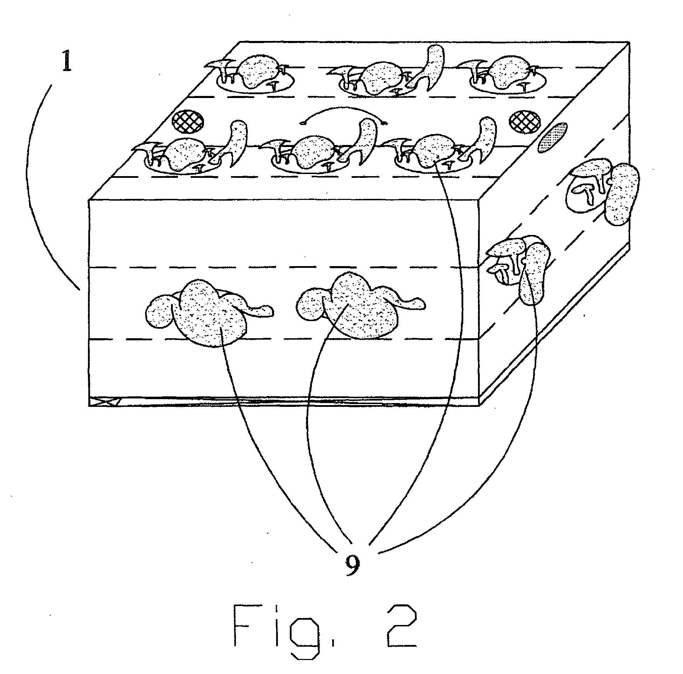

Figure 2 shows an example of an embodiment of the invention, not implying any limitation to this, in which one can see the mushrooms as these are growing (9).

The inoculant can be lyophilised, which enables better handling of the device as a whole:
a. box
b. inoculant (if this is not inside the box from the start of the growing process).
c. phyto-chemical products and/or water (at will)

## Claims

1. A device for growing eatable mushrooms that do not necessarily require wood to grow, comprising:
i. a light box with small holes,
ii. at least one of the holes made in the box being for pouring in liquids; and
iii. a cellulose material set out inside,
iv. at least one of the holes made in the box being for pouring in nutrients, plant hormones, pesticides and water;
v. the cellulosic material is inoculated with vegetative stages of the mushroom to enable its proper growth, preferably mycclia or spores; **characterised in that**:
the box is made of wood, cardboard, and/or permeable or impermeable plastics;
the box is sterilised having received a treatment commonly used for eliminating micro-organisms and/or pests, not desirable for growing mushrooms; the box has a base made of an impermeable material; and
the box has pre-punched strips that cover the holes, which surround said box and can be removed to start growth of the mushrooms.

2. A device for growing mushrooms, according to claim 1, **characterised in that** the mushrooms belong to the Pleurotus genus.

3. A device for growing mushrooms, according to claim 1, **characterised in that** the mushrooms grown are preferably Pleurotus eryngii (King Oyster or Cardoncelo Mushroom), Pleurotus ostreatus (Oyster mushroom)., Agaricus, or Shiitake (lentinus edodes).

4. A device for growing mushrooms, according to claim 1, **characterised in that** the box has handles.

5. A device for growing mushrooms, according to claim 1, in that the cellulosic material set out inside the box is straw, and preferably straw from cereals.

## Patentansprüche

1. Vorrichtung zum Anbauen von essbaren Pilzen, die nicht notwendigerweise Holz zum Wachsen benötigen, bestehend aus:
i. einer leichten Box mit kleinen Löchern,
ii. mindestens einem der Löcher zum Einfüllen von Flüssigkeit,
iii. einem Zellulosematerial im Inneren
iv. mindestens einem der Löcher zum Einfüllen von Nährstoffen, Pflanzenhormonen, Pestiziden und Wasser;
v. wobei das Zellulosematerial mit vegetativen Stadien der Pilze, vorzugsweise Myzelien oder Sporen, beimpft ist, um ein ordentliches Wachstum der Pilze zu ermöglichen,
**dadurch gekennzeichnet, dass**
die Box aus Holz, Pappe und/oder durchlässigem oder undurchlässigem Plastik besteht,
die Box durch eine geläufige Behandlung zum Eliminieren von MikroOrganismen und/oder Schädlingen, die für das Anbauen von Pilzen nicht wünschenswert sind, sterilisiert ist,
die Box eine Basis aus undurchlässigem Material hat und
die Box vorgestanzte Streifen, die die Löcher bedecken und um die Box herumführen, hat, die zum Starten des Wachstums der Pilze entfernt werden kann.

2. Vorrichtung zum Anbauen von Pilzen, gemäß Anspruch 1, **dadurch gekennzeichnet, dass** die Pilze zur Gattung Pleurotus gehören.

3. Vorrichtung zum Anbauen von Pilzen, gemäß Anspruch 1, **dadurch gekennzeichnet, dass** die angebauten Pilze vorzugsweise Pleurotus eryngii (Kräuterseitling), Pleurotus ostreatus (Austernseitling), Agaricus oder Shiitake (lentinus edodes) sind.

4. Vorrichtung zum Anbauen von Pilzen, gemäß Anspruch 1, **dadurch gekennzeichnet, dass** die Box Griffe hat.

5. Vorrichtung zum Anbauen von Pilzen, gemäß Anspruch 1, **dadurch gekennzeichnet, dass** das Zellulosematerial in der Box Stroh, insbesondere Getreidestroh, ist.

## Revendications

1. Un dispositif pour faire pousser des champignons comestibles qui n'ont pas forcément besoin de bois pour pousser, comprenant :
i. une boîte légère avec des petits trous,
ii. au moins un des trous faits dans la boîte servant à verser des liquides à l'intérieur; et
iii. un kit de matière cellulosique à l'intérieur,
iv. au moins un des trous faits dans la boîte servant à verser des nutriments, des hormones végétales, des pesticides et de l'eau;
v.la matière cellulosique est inoculée de champignons au stade végétatif afin de permettre leur croissance, de préférence des moisissures ou des spores;
qui a présente les particularités suivantes :
la boîte est constituée de bois, de carton, et/ou de plastique perméable ou imperméable; la boîte est stérilisée, elle a reçu un traitement communément utilisé afin d'éliminer les microorganismes et/ou les nuisibles, non souhaitables pour le bon développement des champignons ; et la boîte a une base de matière imperméable ; et la boîte a des bandes pré-perforées qui couvrent les trous, qui entourent la boîte et qui peuvent être enlevées pour commencer la culture des champignons.

2. Un dispositif pour faire pousser les champignons, qui selon l'affirmation 1, est **caractérisé par le fait que** les champignons appartiennent au genre des Pleurotes.

3. Un dispositif pour faire pousser les champignons, qui selon l'affirmation 1, est **caractérisé par le fait que** les champignons cultivés sont de préférence des Pleurotus Eryngii (Pleurotes du Panicaut), des Pleurotus ostreatus (Pleurote en huître), des Agaricus (Agarics, ou Psalliotes), ou des Shiitaké (Lentinus edodes).

4. Un dispositif pour faire pousser les champignons, qui selon l'affirmation 1, est **caractérisé par le fait que** la boîte a des poignées.

5. Un dispositif pour faire pousser les champignons, qui selon l'affirmation 1, est **caractérisé par le fait que** le kit de matière cellulosique se trouvant l'intérieur de la boîte est de la paille, et de préférence de la paille de céréales.
